# EUROPÄISCHE PATENTSCHRIFT

(11) **EP 2 652 037 B1**
(45) Veröffentlichungstag und Bekanntmachung des Hinweises auf die Patenterteilung: **18.02.2015**
(21) Anmeldenummer: 11799414.5
(22) Anmeldetag: 15.12.2011
(51) Int. Cl.: C08L 51/04, C08L 55/02, C09K 21/04, C09K 21/08

(54) **KAUTSCHUKMODIFIZIERTE FLAMMGESCHÜTZTE FORMMASSEN UND DEREN HERSTELLUNG**
RUBBER-MODIFIED FLAME-RETARDANT MOULDING COMPOSITIONS AND PRODUCTION THEREOF
MATIÈRES À MOULER IGNIFUGES MODIFIÉES AU CAOUTCHOUC ET LEUR PRÉPARATION

(30) Priorität: 16.12.2010 EP 10195400
(43) Veröffentlichungstag der Anmeldung: 23.10.2013
(73) Patentinhaber: Styrolution Europe GmbH, 60325 Frankfurt am Main (DE)
(72) Erfinder: MÜLLER, Matthias, 64319 Pfungstadt (DE); GÜNTHERBERG, Norbert, 67346 Speyer (DE); KEHR, Günter, 67061 Ludwigshafen (DE); NIESSNER, Norbert, 67159 Friedelsheim (DE)
(74) Vertreter: Jacobi, Markus Alexander
(86) Internationale Anmeldenummer: PCT/EP2011/072881
(87) Internationale Veröffentlichungsnummer: WO 2012/080388

(56) Entgegenhaltungen:
- WO-A1-2010/003891

## Beschreibung

Die Erfindung betrifft flammgeschützte thermoplastische Formmassen, die mehrere Flammschutz-Komponenten enthalten, sowie Verfahren zu deren Herstellung und deren Verwendung.

Diese thermoplastischen Formmassen enthalten:
A) 55 bis 98 Gew.-% mindestens eines mit einem partikelförmigen Pfropfkautschuk schlagzäh modifizierten vinylaromatischen Copolymers,
B) 1 bis 44 Gew.-% eines Flammschutzmittels enthaltend
   B1) einen expandierbaren Graphit,
   B2) eine Phosphor enthaltende Flammschutz-Verbindung, und
   B3) ein fluorhaltiges Polymer,
C) 1 bis 20 Gew.-% eines polare Gruppen enthaltenden, nicht-partikelförmigen Kautschuks, und
D) 0 bis 40 Gew.-% weiterer Zusatzstoffe,
   wobei die Gewichtsprozente jeweils auf das Gesamtgewicht der Komponenten A) bis D) bezogen sind und zusammen 100 Gew.-% ergeben. Der Polybutadien-Gehalt soll 0 bis 11 Gew.-% betragen.

Außerdem betrifft die vorliegende Erfindung ein Verfahren zur Herstellung derartiger Formmassen, die Verwendung derartiger Formmassen zur Herstellung von Formkörpern, Fasern, Schäumen und Folien sowie die hierbei erhältlichen Formkörpern, Fasern, Schäume und Folien.

Expandierbaren Graphit, der auch als Blähgraphit bezeichnet wird, als Flammschutzmittel in Polystyrol ("PS") oder schlagzäh modifiziertem Polystyrol ("HIPS") einzusetzen, ist beispielsweise aus WO 2003/046071 bekannt. Darüber hinaus wird laut dieser Schrift als weitere Flammschutzmittelkomponente eine halogenhaltige Verbindung in Mengen von 2 bis 11%, gerechnet als Halogen, benötigt. Aus beispielsweise toxikologischen Gründen ist es jedoch wünschenswert, den Einsatz halogenhaltiger Flammschutzmittel möglichst weitgehend zu vermeiden.

Halogenfrei flammgeschützte Styrolpolymerisate, die expandierbaren Graphit und eine Phosphorverbindung als Flammschutzkomponenten enthalten werden in WO 2000/34367 und WO 2000/34342 offenbart. Formmassen auf Basis solcherart flammgeschützter Styrolpolymerisate sind bzgl. ihres Abtropfverhaltens im Brandfall aber verbesserungswürdig.

WO 2005/103136 offenbart flammgeschützte Styrolpolymere die neben expandierbarem Graphit und einer Phosphorverbindung ein weiteres Coadditiv enthalten, welches die Migration des phosphorhaltigen Flammschutzmittels an die Polymeroberfläche unterdrücken soll. Explizit als Coadditiv genannt wird Polycarbonat.

Die KR10-1996-0001006 offenbart flammgeschütztes Polystyrol, wobei die Flammschutzmittelkomponenten expandierbaren Graphit, eine Phosphorverbindung und Teflon umfassen.
Die mittlere Teilchengröße des expandierbaren Graphits dabei beträgt 5 µm. Das als Antitropfmittel zugesetzte Teflon wird in Mengen von 1 bis 5 Gewichtsprozent eingesetzt. Die so erhaltenen halogenfrei flammgeschützten Formmassen besitzen eine gute Wärmebeständigkeit und Stoßfestigkeit.

Die WO 2009/007358 beschreibt Acrylnitril-Styrol-Acrylat-Polymerisate ("ASA") und Acrylnitril-Butadien-Styrol-Polymerisate ("ABS"), die mit einem Flammschutzmittelsystem enthaltend expandierbaren Graphit, eine Phosphorverbindung und Teflon ausgerüstet sind, und die darüber hinaus lineare Styrol-Butadien-Blockcopolymere enthalten.

Die WO 2010/003891 beschreibt flammhemmend ausgerüstete Formmassen, die auf mit partikelförmigen Pfropfkautschuken schlagzäh modifizierten vinylaromatischen Copolymeren basieren, insbesondere auf ASA und/oder ABS, und die gegenüber bekannten Formmassen eine verbesserte Kombination von flammhemmenden, mechanischen und rheologischen Eigenschaften besitzen. Die dort beschriebenen Formmassen auf Basis von ABS weisen allerdings noch einen unangenehmen Eigengeruch auf.

Der vorliegenden Erfindung lag als eine Aufgabe zugrunde, den zuvor genannten Nachteilen abzuhelfen, insbesondere flammhemmend ausgerüstete Formmassen bereitzustellen, die auf mit partikelförmigen Pfropfkautschuken schlagzäh modifizierten vinylaromatischen Copolymeren basieren, insbesondere auf ASA und/oder ABS, und die gegenüber bekannten Formmassen einen verbesserten Eigengeruch aufweisen.

Demgemäß wurden die eingangs definierten Formmassen gefunden, mit einem Polybutadien-Gehalt zwischen 0 und 11 Gew.-% (bezogen auf das Gesamtgewicht der Formmassen).

Die erfindungsgemäßen flammhemmend ausgerüsteten Formmassen basierend auf mit partikelförmigen Pfropfkautschuken schlagzäh modifizierten vinylaromatischen Copolymeren weisen gegenüber bekannten Formmassen eine deutlich verringerten Eigengeruch auf.

Die erfindungsgemäßen Formmassen sowie die weiteren erfindungsgemäßen Verfahren und Gegenstände werden im Folgenden beschrieben.

Die erfindungsgemäßen Formmassen enthalten folgende Komponenten (bzw. bestehen aus):
A) 55 bis 98 Gew.-%, bevorzugt 57 bis 92 Gew.-%, besonders bevorzugt 60 bis 85 Gew.-%, Komponente A,
B) 1 bis 44 Gew.-%, bevorzugt 5 bis 40 Gew.-%, besonders bevorzugt 10 bis 35 Gew.-%, Komponente B,
C) 1 bis 20 Gew.-%, bevorzugt 3 bis 18 Gew.-%, besonders bevorzugt 5 bis 15 Gew.-% Komponente C, und
D) 0 bis 40 Gew.-%, bevorzugt 0 bis 30 Gew.-%, besonders bevorzugt 0 bis 25 Gew.-% Komponente D,
wobei die Gewichtsprozente jeweils auf das Gesamtgewicht der Komponenten A) bis D) bezogen sind und zusammen 100 Gew.-% ergeben, und der Polybutadiengehalt von 0 bis 11 Gew.-% beträgt. In einer weiteren Ausführungsform beträgt der Polybutadiengehalt von 3 bis 10,5 Gew.-%, bevorzugt von 5 bis 10 Gew.-%.

In einer weiteren bevorzugten Ausführungsform beträgt der Polybutadiengehalt 0 Gew.-%, d.h. es werden partikelförmige Pfropfkauschuke mit einem Kautschuk-Kern auf Basis anderer Monomere als Butadien eingesetzt, insbesondere auf Basis von Meth(Acrylaten), bevorzugt Acrylaten, besonders bevorzugt Butylacrylat eingesetzt.

Die Flammschutzmittel-Komponente B) umfasst insbesondere folgende Bestandteile:
B1) 20 bis 79,99 Gew.-%, bevorzugt 30 bis 69,9 Gew.-%, besonders bevorzugt 40 bis 59,5 Gew.-%, der Komponente B1),
B2) 20 bis 79,99 Gew.-%, bevorzugt 30 bis 69,9 Gew.-%, besonders bevorzugt 40 bis 59,5 Gew.-%, der Komponente B2) und
B3) 0,01 bis 4 Gew.-%, bevorzugt 0,1 bis 3 Gew.-%, besonders bevorzugt 0,5 bis 2 Gew.-%, der Komponente B3),
wobei die Gewichtsprozente jeweils auf das Gesamtgewicht der Komponenten B1) bis B3) bezogen sind und zusammen 100 Gew.-% ergeben.

In einer speziellen Ausführungsform der Erfindung enthält die Formmasse (bzw. besteht aus):
A) 60 bis 85 Gew.-%, Komponente A,
B) 10 bis 35 Gew.-%, Komponente B,
C) 5 bis 15 Gew.-% Komponente C, und
D) 0 bis 25 Gew.-% Komponente D.

Die Flammschutzmittel-Komponente B) kann dabei bevorzugt folgende Bestandteile beinhalten:
B1) 40 bis 59,5 Gew.-%, der Komponente B1),
B2) 40 bis 59,5 Gew.-%, der Komponente B2),
B3) 0,01 bis 4 Gew.-%, der Komponente B3),
wobei die Gewichtsprozente der Komponente B jeweils auf das Gesamtgewicht der Komponenten B1) bis B3) bezogen sind und zusammen 100 Gew.-% ergeben, wobei die Gewichtsprozente der Formmasse (insgesamt) jeweils auf das Gesamtgewicht der Komponenten A) bis D) bezogen sind und zusammen 100 Gew.-% ergeben. Der Polybutadiengehalt der Formmasse (insgesamt) soll von 0 bis 11 Gew.-% betragen.

Oftmals werden in den Zusammensetzungen 5 bis 15 Gew.-% an Komponente C (wie Etylen-Methacrylat-Copolymer (z.B. Elvaloy® 1330 EAC)), und 0 bis 25 Gew.-% an Komponente D (wie handelsüblicher Ruß ("carbon black")) eingesetzt.

### Zur Komponente A):

Als Komponente A sind grundsätzlich alle mit einem partikelförmigen Pfropfkautschuk schlagzäh modifizierte vinylaromatische Copolymere geeignet. Diese mit einem partikelförmigen Pfropfkautschuk schlagzäh modifizierten vinylaromatischen Copolymere und ihre Herstellung sind dem Fachmann bekannt, in der Literatur beschrieben (beispielsweise in A. Echte, Handbuch der technischen Polymerchemie, VCH Verlagsgesellschaft, Weinheim, 1993; und Saechtling, Kunststoff Taschenbuch, Carl Hanser Verlag, München, 29. Ausgabe, 2004) und oftmals kommerziell verfügbar.

Bevorzugte Komponenten A) enthalten als Kautschukphase einen partikelförmigen Pfropfkautschuk und als thermoplastische Hartphase Copolymerisate aus vinylaromatischen Monomeren und Vinylcyaniden (SAN), insbesondere aus α-Methylstyrol und Acrylnitril, besonders bevorzugt aus Styrol und Acrylnitril.

Die Komponente A) enthält in der Regel 15 bis 60 Gew.-%, bevorzugt 25 bis 55 Gew.-%, insbesondere 30 bis 50 Gew.-%, partikelförmigen Pfropfkautschuk und 40 bis 85 Gew.-%, bevorzugt 45 bis 75 Gew.-%, insbesondere 50 bis 70 Gew.-%, vinylaromatische Copolymere, wobei die Gewichtsprozente jeweils auf das Gesamtgewicht aus partikelförmigen Pfropfkautschuk und vinylaromatischem Copolymer bezogen sind und zusammen 100 Gew.-% ergeben.

Bevorzugt werden als mit einem partikelförmigen Pfropfkautschuk schlagzähmodifiziertes SAN Acrylnitril-Styrol-Acrylat-Polymerisate ("ASA") und/oder Acrylnitril-Butadien-Styrol-Polymerisate ("ABS") eingesetzt, sowie (Meth)acrylat-Acrylnitril-Butadien-Styrol-Polymerisate ("MABS", transparentes ABS), aber auch Blends von SAN, ABS, ASA und MABS mit anderen Thermoplasten wie Polycarbonat, Polyamid, Polyethylenterephthalat, Polybutylenterephthalat, Polyvinylchlorid, Polyolefinen, ganz besonders bevorzugt mit Polycarbonat.

Unter ASA-Polymerisaten werden im allgemeinen mit einem partikelförmigen Pfropfkautschuk schlagzähmodifizierte SAN-Polymerisate verstanden, bei denen kautschukelastische Pfropfcopolymerisate von vinylaromatischen Verbindungen, insbesondere Styrol, und Vinylcyaniden, insbesondere Acrylnitril, auf Polyalkylacrylatkautschuken in einer Copolymermatrix aus insbesondere Styrol und/oder α-Methylstyrol und Acrylnitril vorliegen. ASA-Polymerisate und ihre Herstellung sind dem Fachmann bekannt und in der Literatur beschriebenen, beispielsweise in DIN EN ISO 6402-1 DE vom Februar 2003, WO 2002/00745, WO 2000/11080, EP-A 450 485 und WO 2007/031445.

Unter ABS-Polymerisaten werden im allgemeinen schlagzähmodifizierte SAN-Polymerisate verstanden, bei denen Dien-Polymerisate, insbesondere 1,3-Polybutadien, in einer Copolymermatrix aus insbesondere Styrol und/oder α-Methylstyrol und Acrylnitril vorliegen. ABS-Polymerisate und ihre Herstellung sind dem Fachmann bekannt und in der Literatur beschriebenen, beispielsweise in DIN EN ISO 2580-1 DE vom Februar 2003, WO 2002/00745 und WO 2008/020012.

### Zur Komponente B):

Die thermoplastischen Formmassen enthalten als Komponente B) erfindungsgemäß eine Flammschutzmittelmischung enthaltend (oder bestehend aus):
B1) expandierbaren Graphit,
B2) eine Phosphor enthaltende Flammschutzverbindung und
B3) ein fluorhaltiges Polymer.

Die erfindungsgemäßen Formmassen enthalten als Komponente B1) dem Fachmann bekannten und in der Literatur beschriebenen expandierbaren Graphit, sogenannten Blähgraphit (wärme- bzw. hitzeexpandierbarer Graphit). Dieser leitet sich in der Regel von natürlichem oder künstlichem Graphit ab.

Der Blähgraphit ist beispielsweise erhältlich durch Oxidation von natürlichem und/oder künstlichem Graphit. Als Oxidationsagentien können H₂O₂ oder Salpetersäure in Schwefelsäure eingesetzt werden. Weiterhin kann der Blähgraphit durch Reduktion, z.B. mit Natrium-naphthalenid in einem aprotischen organischen Lösungsmittel hergestellt werden. Aufgrund seiner Schichtgitterstruktur ist Graphit in der Lage, spezielle Formen von Einlagerungsverbindungen zu bilden. In diesen so genannten Zwischengitterverbindungen sind Fremdatome oder Fremdmoleküle in z.T. stöchiometrischen Verhältnissen in die Räume zwischen den Kohlenstoffatomen aufgenommen worden. Die Oberfläche des Blähgraphits kann zur besseren Verträglichkeit gegenüber der Thermoplastmatrix mit einem Beschichtungsmittel beschichtet sein, beispielsweise mit dem Fachmann bekannten Silan-Schlichten.

Für den Fall, dass der Blähgraphit durch o.g. Oxidation erhalten wurde, kann es notwendig sein, eine alkalische Verbindung zuzusetzen, da der Blähgraphit (durch die enthaltende Säure) ansonsten Korrosion der Formmassen und/oder Lager- und Herstellapparate derartiger Formmassen verursachen kann. Insbesondere Alkaliverbindungen sowie Mg(OH)₂ oder Al-Hydroxide können in Mengen bis zu 10, vorzugsweise bis zu 5 Gew.-% (bezogen auf 100 Gew.-% B1) zugegeben werden. Vorteilhaft erfolgt die Mischung bevor die Komponenten compoundiert werden.

Vorzugsweise beträgt die Hitze-Ausdehnung des Blähgraphits bei schnellem Aufheizen von Raumtemperatur auf 800°C (in Richtung der c-Achse des Kristalls) mindestens 100 ml/g, vorzugsweise mindestens 110 ml/g (sog. spezifische Volumenänderung).

Wesentlich für die Eignung als Flammschutzmittel ist es, dass der Blähgraphit sich nicht in größerem Ausmaß ausdehnt bei Temperaturen unter 270°C, bevorzugt unter 280°C. Darunter versteht der Fachmann, dass der Blähgraphits bei den genannten Temperaturen in einem Zeitraum von 10 min eine Volumenexpansion von weniger als 20 % erfährt.

Der Ausdehnungskoeffizient (als spezifische Kerngröße) bedeutet in der Regel die Differenz zwischen dem spezifischen Volumen (ml/g) nach Erhitzen und dem spezifischen Volumen bei 20°C Raumtemperatur. Dies wird allgemein gemessen nach folgender Vorschrift: Ein Quarzbehälter wird auf 1000°C in einem elektrischen Schmelzeofen erhitzt. 2 g des Blähgraphits werden schnell in den Quarzbehälter gegeben und dieser 10 Sekunden im Schmelzeofen belassen. Das Gewicht von 100 ml des expandierten Graphits wird gemessen, um die "loosened apparent specific gravity" zu bestimmen. Der Kehrwert bildet dann das spezifische Volumen bei dieser Temperatur. Das spezifische Volumen bei Raumtemperatur wird entsprechend bei 20°C gemessen. (Ausdehnungskoeffizient = spez. Volumen nach Erhitzen - spezifisches Volumen bei 20°C).

Die mittlere Teilchengröße D₅₀ des Blähgraphits soll vorzugsweise zwischen 10 µm und 1000 µm, bevorzugt zwischen 30 µm und 850 µm, insbesondere bevorzugt zwischen 200 µm und 700 µm, liegen. Sind die mittleren Teilchengrößen niedriger, wird in der Regel keine ausreichend Flammschutzwirkung erzielt; sind sie größer, werden üblicherweise die mechanischen Eigenschaften der thermoplastischen Formmassen nachteilig beeinflusst.

Die mittlere Teilchengröße und die Teilchengrößenverteilung des Blähgraphits B1) kann aus der integralen Volumenverteilung bestimmt werden. Bei den mittleren Teilchengrößen handelt es sich in allen Fällen um das Volumenmittel der Teilchengrößen, wie sie mittels Laserlichtbeugung an einem Malvern-Mastersizer 2000 am Trockenpulver ermittelt werden. Die Laserlichtbeugung liefert die integrale Verteilung des Teilchendurchmessers einer Probe. Hieraus lässt sich entnehmen, wie viel Prozent der Teilchen einen Durchmesser gleich oder kleiner einer bestimmten Größe haben. Der mittlere Teilchendurchmesser, der auch als D₅₀-Wert der integralen Volumenverteilung bezeichnet wird, ist dabei als der Teilchendurchmesser definiert, bei dem 50 Gew.% der Teilchen einen kleineren Durchmesser haben als der Durchmesser, der dem D₅₀-Wert entspricht. Ebenso haben dann 50 Gew.% der Teilchen einen größeren Durchmesser als der D₅₀-Wert.

Die Dichte des Blähgraphits liegt üblicherweise im Bereich von 0,4 bis 2 g/cm³.

Bei den phosphorhaltigen Verbindungen der Komponente B2) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E.Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von als Komponente B2) geeigneten phosphorhaltigen Verbindungen, insbesondere den anorganischen oder organischen Phosphaten, Phosphiten, Phosphonaten, Phosphatestern, rotem Phosphor und Triphenylphosphinoxid, seien nur einige Beispiele erwähnt. Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin und Trisnonylphenylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin. Phosphorverbindungen der Wertigkeitsstufe -1 leiten sich vom Phosphinoxid ab. Geeignet sind Phosphinoxide der allgemeinen Formel (I) 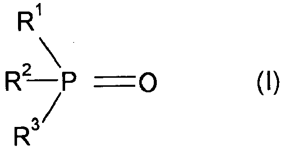 wobei R¹, R² und R³ in Formel I gleiche oder verschiedene Alkyl-, Aryl-, Alkylaryl-oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid.

Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenylphosphinoxid, Tricyclohexlyphosphinoxid, Tris-(n-octyl)-phosphinoxid und Tris-(cyanoethyl)-phosphinoxid, insbesondere Triphenylphosphinoxid. Ebenso geeignet ist Triphenylphosphinsulfid und dessen wie oben beschriebene Derivate der Phosphinoxide. Phosphor der Wertigkeitsstufe +0 ist der elementare Phosphor. In Frage kommen roter und schwarzer Phosphor. Bevorzugt ist roter Phosphor, insbesondere oberflächenbeschichteter roter Phosphor, wie er dem Fachmann bekannt, in der Literatur beschrieben und als Flammschutzmittel für Polymere kommerziell verfügbar ist.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)-ester u.a. in Frage.

Ferner sind geeignet Aryl(Alkyl)phosphinsäureamide, wie z.B. Diphenylphosphinsäuredimethylamid und Sulfonamidoaryl(alkyl)phosphinsäure-derivate, wie z.B. p-Tolylsulfonamidodiphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. Verbindungen gemäß Formel (II) 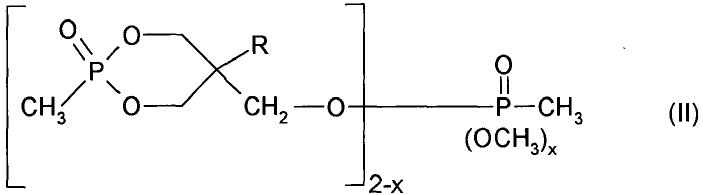 wobei R einen C₁ bis C₄-Alkylrest, bevorzugt Methylrest, x=0 oder 1 bedeutet (Amgard® P 45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten.
Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)-phosphat oder 2-Ethylhexyldiphenyl-phosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel (III) (RDP): 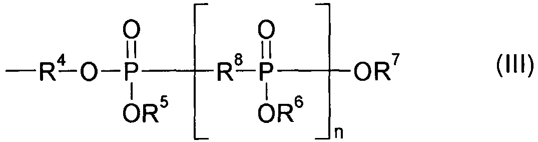 in der die Substituenten in Formel III folgende Bedeutung haben:
R⁴-R⁷ ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,
R⁸ ein zweiwertiger Phenolrest, bevorzugt 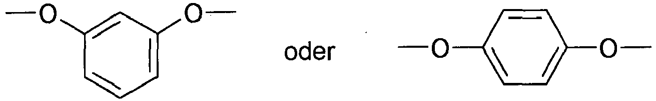
und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex® oder Fyrol®-RDP (Akzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Es können auch cyclische Phosphate eingesetzt werden. Besonders geeignet ist hierbei Diphenylpentaerythritdiphosphat und Phenylneopentylphosphat. Außer den oben angeführten niedermolekularen Phosphorverbindungen kommen noch oligomere und polymere Phosphorverbindungen in Frage. Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der DE-A 20 36 173 beschrieben ist. Das Molekulargewicht gemessen durch Dampfdruck-Osmometrie in Dimethylformamid, der Polyphospholinoxide soll im Bereich von 500 bis 7000, vorzugsweise im Bereich von 700 bis 2000 liegen. Das Phosphoratom besitzt hierbei die Oxidationsstufe -1.

Ferner können anorganische Koordinationspolymere von Aryl(alkyl)-phosphinsäuren wie z.B. Poly-β-natrium(I)-methylphenylphosphinat eingesetzt werden. Ihre Herstellung wird in DE-A 31 40 520 angegeben. Der Phosphor besitzt die Oxidationszahl +1. Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US 4 403 075) hergestellt werden. In Frage kommt aber auch das anorganische Poly(ammoniumphosphat).

Es können auch oligomere Pentaerythritphosphite, -phosphate und -phosphonate gemäß EP-A 008486, z.B. Mobil Antiblaze® 19 (eingetragene Marke der Firma Mobil Oil), verwendet werden, z.B. gemäß Formeln (IV) und (V): 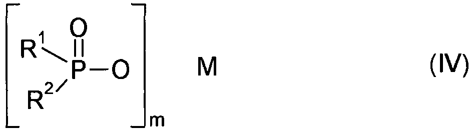 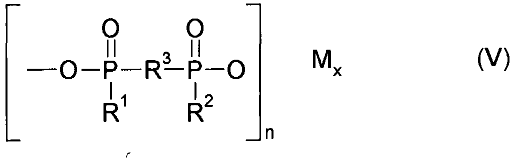 wobei die Substituenten in den Formeln IV und V folgende Bedeutung haben:
- R¹, R²: Wasserstoff, C₁- bis C₆-Alkyl, der gegebenenfalls eine Hydroxylgruppe enthält, vorzugsweise C₁- bis C₄-Alkyl, linear oder verzweigt, z.B. Methyl, Ethyl, n-Propyl, isoPropyl, n-Butyl, tert.-Butyl, n-Pentyl; Phenyl; wobei bevorzugt mindestens ein Rest R¹ oder R², insbesondere R¹ und R² Wasserstoff ist;
- R³: C₁- bis C₁₀-Alkylen, linear oder verzweigt, z.B. Methylen, Ethylen, n-Propylen, isoPropylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen; Arylalkylen, z.B. Phenyl-methylen, Phenyl-ethylen, Phenyl-propylen, Phenyl-butylen;
- M: ein Erdalkali-, Alkalimetall, Al, Zn, Fe, Bor;
- m: eine ganze Zahl von 1 bis 3;
- n: eine ganze Zahl von 1 und 3 und
- x: 1 oder 2.

Besonders bevorzugt sind Verbindungen der Formel IV, in denen R¹ und R² Wasserstoff ist, wobei M vorzugsweise Ca, Zn oder Al ist und Calciumphosphinat als Verbindung ganz besonders bevorzugt ist. Derartige Produkte sind im Handel z.B. als Calciumphosphinat erhältlich.

Geeignete Salze der Formel (IV) oder (V), in denen nur ein Rest R¹ oder R² Wasserstoff bedeutet, sind z.B. Salze der Phenylphosphinsäure, wobei deren Na- und/oder Ca-Salze bevorzugt sind.

Weiterhin bevorzugte Salze weisen einen hydroxylgruppenhaltigen Alkylrest R¹ und/oder R² auf. Diese sind beispielsweise durch Hydroxymethylierung erhältlich. Bevorzugte Verbindungen sind Ca, Zn und Al-Salze.

Die mittlere Teilchengröße D₅₀ (gemessen nach der oben beschriebenen Methode zur Teilchengrößenbestimmung der Komponente B1) der Komponente B2) ist vorzugsweise kleiner 10 µm, vorzugsweise kleiner 7 µm und insbesondere kleiner 5 µm. Der D₁₀-Wert ist vorzugsweise kleiner 4 µm, insbesondere 3 µm und ganz besonders bevorzugt kleiner 2 µm. Bevorzugte D₉₀-Werte sind kleiner 40 µm und insbesondere kleiner 30 µm und ganz besonders bevorzugt kleiner 20 µm.

Weiterhin bevorzugt sind Phosphorverbindungen der allgemeinen Formel (VI): 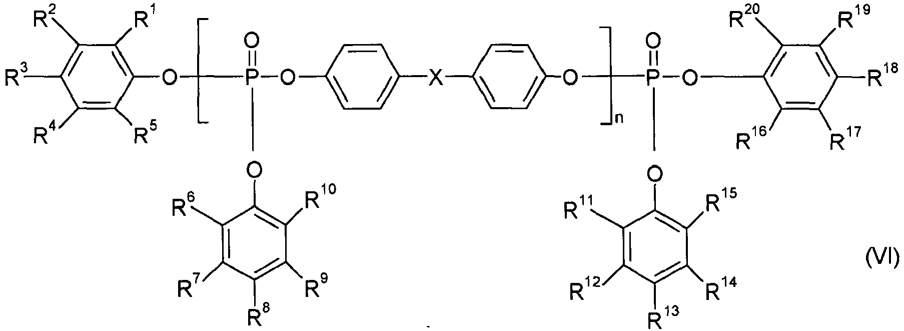 wobei die Substituenten in Formel (VI) folgende Bedeutung haben:
R¹ bis R²⁰ unabhängig voneinander Wasserstoff, eine lineare oder verzweigte Alkylgruppe bis zu 6 C-Atomen
   - n: einen Durchschnittswert von 0,5 bis 50 und
   - X: eine Einfachbindung, C=O, S, SO₂, C(CH₃)₂

Bevorzugte Verbindungen B2) sind solche der Formel (VI), in denen R¹ bis R²⁰ unabhängig voneinander Wasserstoff und/oder einen Methylrest bedeuten. Für den Fall, daß R¹ bis R²⁰ unabhängig voneinander einen Methylrest bedeuten, sind solche Verbindungen bevorzugt, in welchen die Reste R¹, R⁵, R⁶, R¹⁰, R¹¹, R¹⁵, R¹⁶, R²⁰ in ortho-Stellung zum Sauerstoff der Phosphatgruppe mindestens einen Methylrest darstellen.

Weiterhin bevorzugt sind Verbindungen B2) in denen pro aromatischem Ring eine Methylgruppe, vorzugsweise in ortho-Stellung vorhanden ist und die anderen Reste Wasserstoff bedeuten. Insbesondere bevorzugt sind als Substituenten SO₂ und S, sowie ganz besonders bevorzugt C(CH₃)₂ für X in obiger Formel (VI). n beträgt in obiger Formel (VI) vorzugsweise als Durchschnittswert 0,5 bis 5, insbesondere 0,7 bis 2 und insbesondere ≈ 1.

Die Angabe von n als Durchschnittswert ergibt sich durch das Herstellverfahren der oben aufgeführten Verbindungen, so daß der Oligomerisierungsgrad meist kleiner 10 beträgt und geringe Anteile (meist < 5 Gew.-%) an Triphenylphosphat enthalten sind,
wobei dies von Charge zu Charge unterschiedlich ist. Solche Verbindungen B2) sind als CR - 741 der Firma Daihachi im Handel erhältlich.

Als ganz besonders bevorzugte Ausführungsform der Erfindung hat sich der Einsatz einer Mischung aus rotem Phosphor und mindestens einer der oben beschriebenen, von rotem Phosphor verschiedenen Phosphorverbindungen als Komponente B2) erwiesen. Eine insbesonders als Komponente B2) bevorzugte Mischung besteht aus rotem Phosphor und mindestens einem anorganischen oder organischen Phosphat, Phosphit, Phosphonat, Phosphatester oder Triphenylphosphinoxid. Besonders vorteilhaft sind Mischungen aus rotem Phosphor und Ammoniumpolyphosphat, aus rotem Phosphor und Bisphenol-A-bis-diphenylphosphat oder aus rotem Phosphor und Triphenylphosphat. Eine ganz besonders als Komponente B2) bevorzugte Mischung umfaßt roten Phosphor und Ammoniumpolyphosphat. Eine weitere ganz besonders als Komponente B2) bevorzugte Mischung besteht aus rotem Phosphor und Ammoniumpolyphosphat und Triphenylphosphat.

Wenn als Komponente B2) die genannte Mischung aus rotem Phosphor und aus mindestens einer der oben beschriebenen, von rotem Phosphor verschiedenen Phosphorverbindungen eingesetzt wird, weisen diese erfindungsgemäßen Formmassen eine verbesserte Kombination von flammhemmenden, mechanischen und rheologischen Eigenschaften, insbesondere auch eine hohe Wärmeformbeständigkeit (Vicat-Temperatur), auf.

Wenn als Komponente B2) die genannten Mischungen aus rotem Phosphor und mindestens einer der oben beschriebenen, von rotem Phosphor verschiedenen Phosphorverbindungen eingesetzt werden, enthält die Komponente B2) in der Regel 10 bis 90 Gew.-%, bevorzugt 20 bis 80 Gew.-%, besonders bevorzugt 30 bis 70 Gew.-%, roten Phosphor und 10 bis 90 Gew.-%, bevorzugt 20 bis 80 Gew.-%, besonders bevorzugt 30 bis 70 Gew.-%, mindestens einer der oben beschriebenen, von rotem Phosphor verschiedenen Phosphorverbindungen, wobei die Gewichtsprozente von rotem Phosphor und der mindestens einen oben beschriebenen, von rotem Phosphor verschiedenen Phosphorverbindung jeweils auf das Gesamtgewicht der Komponente B2) bezogen sind und zusammen 100 Gew.-% ergeben.

Als Komponente B3) enthalten die Formmassen ein fluorhaltiges Polymer. Bevorzugt sind fluorhaltige Ethylenpolymerisate. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen in der Regel homogen verteilt in den Formmassen vor und weisen bevorzugt eine mittlere Teilchengröße D₅₀ im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polymerschmelze erzielen.

In einer bevorzugten Ausführungsform der Erfindung beträgt der Gewichtsanteil des fluorhaltigen Polymers B3) bezogen auf das Gesamtgewicht der Komponenten A) bis D) von 0,01 bis 0,5 Gew.-%, bevorzugt von 0,1 bis 0,45 Gew.-%, besonders bevorzugt von 0,2 bis 0,4 Gew.-%.

### Zur Komponente C):

Als Komponente C) sind grundsätzlich alle dem Fachmann bekannten und in der Literatur beschriebenen polaren Gruppen enthaltende, nicht-partikelförmige Kautschuke geeignet. Als erfindungsgemäß geeignete Komponenten C) sind beispielsweise polare Gruppen enthaltende, nicht-partikelförmige Kautschuke einsetzbar, die vernetzt sind. Bevorzugte Komponenten C) sind aber polare Gruppen enthaltende unvernetzte Kautschuke, insbesondere polare Gruppen enthaltende lineare Kautschuke.

Polare Gruppen im Sinne dieser Erfindung sind bevorzugt O- und/oder N-haltige funktionelle Gruppen, insbesondere Hydroxy-, Alkoxy-, Amino-, Imino-, Alkoxycarbonyl-, Carboxamid-und/oder Carboxygruppen, besonders bevorzugt sich von Acrylsäure oder Maleinsäure ableitende Säure- oder Estergruppen.

Insbesondere als Komponente C) geeignet sind Ethylen-Acrylat-Kautschuke.

Bevorzugte Ethylen-Acrylat-Kautschuke sind Copolymere aus Ethylen und Methylacrylat oder insbesondere Terpolymere aus Ethylen, Methylacrylat und einer ungesättigten Carbonsäure; als ungesättigte Carbonsäure sind zur Herstellung dieser Terpolymere Maleinsäure oder deren Halbester, bevorzugt aber Acrylsäure geeignet.

Die Ethylen-Acrylat-Kautschuke lassen sich auch in einer beispielsweise mit Diaminen, insbesondere mit Hexan-1,6-diamin oder 4,4'-Methylendianilin, vernetzten Form als Komponente C) einsetzen. Im Rahmen der vorliegenden Erfindung besonders geeignete Ethylen-Acrylat-Kautschuke sind unter der Bezeichnung Elvaloy® 1330 EAC (Fa. DuPont) kommerziell verfügbar.

### Zur Komponente D):

Die thermoplastischen Formmassen können ein oder mehrere - von den Komponenten A), B) und C) verschiedene - Zusatzstoffe als Komponente D) enthalten. Geeignet sind grundsätzlich alle dem Fachmann bekannten und in der Literatur beschriebenen kunststoffüblichen Zusatzstoffe.
Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher sowie Fasern, beispielsweise Glasfasern oder Kohlenstofffasern.

Oxidationsverzögerer und Wärmestabilisatoren, die der thermoplastischen Formmasse gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen, eingesetzt werden.

Gleit- und Entformungsmittel, die in der Regel in Mengen bis zu 1 Gew.-%, bezogen auf das Gewicht der thermoplastischen Formmassen, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie N,N'-Ethylen-bis-stearamid.

Als Glasfasern können in den erfindungsgemäßen Formmassen alle dem Fachmann bekannten und in der Literatur beschriebenen Glasfasern eingesetzt werden (siehe beispielsweise Milewski, J.V., Katz, H.S. "Handbook of Reinforcements for Plastics", S. 233 ff., Van Nostrand Reinholt Company Inc, 1987).

### Zu den Herstellungsverfahren:

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 200 bis 280°C.

Nach einer bevorzugten Arbeitsweise können in einem ersten Schritt die Komponenten A), B) außer B1), C) und gegebenenfalls D) vorvermischt werden. Die vorgemischten Komponenten können entweder konfektioniert und beispielsweise granuliert werden, sie können aber auch direkt als Schmelze, beispielsweise auf dem gleichen Extruder, in einem nachfolgenden zweiten Schritt mit Komponente B1) schmelzevermischt werden.

Die erfindungsgemäßen flammhemmend ausgerüsteten Formmassen basierend auf die auf mit partikelförmigen Pfropfkautschuken schlagzäh modifizierten vinylaromatischen Copolymeren weisen gegenüber bekannten Formmassen einen deutlich verringerten Eigengeruch auf.

Die Erfindung wird durch die Beispiele und Patentansprüche näher erläutert.

### Zu den Meßmethoden:

### Kerbschlagzähigkeit aₖ [kJ/m²]:

Die Kerbschlagzähigkeit aₖ wurde gemäß ISO 179 1eA(F) bei 23°C bestimmt.

### Fließfähigkeit MVR [ml/10 min]:

Als Maß für die Fließfähigkeit wurde die Melt-Volume-Rate MVR 200/5 gemäß DIN EN ISO 1133 bestimmt.

### Wärmeformbeständigkeit, Vicat B, [°C]:

Die Wärmeformbeständigkeit wurde als Vicat-Erweichungstemperatur an Normkleinstäben bei einer Heizrate von 50 K/Stunde und einer Kraft von 49,05 N nach DIN 53460, Verfahren B, bestimmt.

### Nachbrennzeit t_{N} [s]:

Im Brandtest in Anlehnung an UL 94, vertical burning standard, wurde an Stäben mit einer Dicke von 1,6 mm nach einer ersten Beflammungsdauer von 10 Sekunden die erste Nachbrennzeit t1 gemessen. Nach einer sich an das Verlöschen der Flammen direkt anschließenden zweiten Beflammungsdauer von 10 Sekunden wurde die zweite Nachbrennzeit t2 gemessen. Die Summe der Nachbrennzeiten t1 und t2 ergibt die Nachbrennzeit t_{N} (angegeben wird jeweils der Mittelwert der an zwei Stäben bestimmten Nachbrennzeiten t_{N}).

### Geruchstest:

Für den Geruchstest wurden Stäbe mit einer Dicke von 1,6 mm verwendet, wie sie auch für den Brandtest verwendet werden. Die Stäbe wurden in ein 500 ml Schraubglas gegeben und im geschlossenen Zustand 24h bei 60°C gelagert. Nach Abkühlung auf Zimmertemperatur wurde der Geruch auf einer Skala bewertet von:
*sehr schlecht (- -), schlecht (-), zufriedenstellend (o), gut (+) bis sehr gut (++).*

### Zu den Einsatzstoffen

Komponenten oder Versuche mit vorangestelltem "V-" sind nicht erfindungsgemäß und dienen zum Vergleich.

### Polymer-Komponente A):

Als Komponenten A wurden eingesetzt:
a-I: ein handelsübliches Acrylnitril-Butadien-Styrol-Copolymer (ABS), Terluran® HI10, der BASF SE, enthaltend eine Styrol-Acrylnitril-Copolymer-Hartphase und einen partikelförmigen Butadien-Pfropfkautschuk.
a-II: ein handelsübliches Butylacrylat-Styrol-Acrylnitril-Copolymer (ASA), Luran S, der BASF SE, enhaltend eine Styrol-Acrylnitril-Copolymer-Hartphase und einen partikelförmigen Butylacrylat-Pfropfkautschuk.
a-III: ein Styrol-Acrylnitril-Copolymer (SAN) enthaltend 24 Gew.-% Acrylnitril und 78 Gew-% Styrol mit einer Viskositätszahl von 64 ml/g.

### Flammschutzmittel-Komponente B):

### Als Komponente B1) wurden eingesetzt:

b1-I: Blähgraphit Nord-Min® 503 der Firma Nordmann, Rassmann, GmbH, mit einer mittleren Teilchengröße D₅₀ von 465 µm, einer freien Expansion (beginnend bei ca. 300°C) von mindestens 150 ml/g und einer Schüttdichte von 0,5 g/ml bei 20°C.

### Als Komponente B2) wurde eingesetzt:

b2-I: Disflammol® TP, ein Triphenylphosphat der Lanxess Aktiengesellschaft.
b2-II: Nord-Min® JLS, ein Ammoniumpolyphosphat der Firma Nordmann, Rassmann, GmbH.
b2-III: Masteret 38450, ein roter Phosphor-Masterbatch der Firma Italmatch Chemicals Spa.

### Als Komponente B3) wurde eingesetzt:

b3-I: Polytetrafluorethylen PTFE TE-3893, Teflon® Dispersion der Fa. C. H. Erbslöh mit einem PTFE-Gehalt von 60 Gew.-% (bezogen auf das Gesamtgewicht der Dispersion).

### Kautschuk-Komponente C):

### Als Komponente C) wurde eingesetzt:

c-I: Ein handelsübliches lineares Etylen-Methacrylat-Copolymer, Elvaloy® 1330 EAC, der Fa. DuPont.

### Weitere Zusatzstoffe D):

### Als Komponente D) wurden eingesetzt:

d-I: Black Pearls® 880, ein handelsüblicher Ruß (carbon black) der Fa. Cabot Corp.

### Herstellung der Formmassen und Formkörper:

Zur Bestimmung der in Tabelle 1 und 2 genannten Brand- und Geruchseigenschaften wurden die Komponenten A) bis D) (jeweilige Gew.-teile s. Tabelle 1) auf einem DSM Midiextruder homogenisiert und mit einem Spritzgußaufsatz bei 240°C Schmelzetemperatur und 80°C Werkzeugoberflächentemperatur zu Prüfkörpern gemäß UL 94, ("vertical burning standard"), mit einer Dicken von 1,6 mm extrudiert.

Die wesentliche Geruchsquelle ist dabei auf eine Interaktion zwischen den Blähgraphit und der Polybutadien-Komponente aus dem ABS zurückzuführen, was anhand der Beispiele in Tabelle belegt wird.

**Tabelle 1: Zusammensetzung und Eigenschaften der Formmassen (vorangestelltes V: zum Vergleich)**

| Beispiel | V-1 | V-2 | V-3 | 1 | 2 | 3 | 4 |
|---|---|---|---|---|---|---|---|
| Zusammensetzung [Gew.-teile (Gew.-%)] | | | | | | | |
| a-I | 54.6 | 49.6 | 44.6 | 39.6 | 34.6 | 29.6 | 0 |
| a-II | 0 | 5 | 10 | 15 | 20 | 25 | 54,6 |
| a-III | 16.7 | 16.7 | 16.7 | 16.7 | 16.7 | 16.7 | 16,7 |
| b1-I | 8 | 8 | 8 | 8 | 8 | 8 | 8 |
| b2-I | 4 | 4 | 4 | 4 | 4 | 4 | 4 |
| b2-II | 1 | 1 | 1 | 1 | 1 | 1 | 1 |
| b2-III | 4.5 | 4.5 | 4.5 | 4.5 | 4.5 | 4.5 | 4,5 |
| b3-I | 0.4 | 0.4 | 0.4 | 0.4 | 0.4 | 0.4 | 0,4 |
| c-I | 10 | 10 | 10 | 10 | 10 | 10 | 10 |
| d-I | 0.8 | 0.8 | 0.8 | 0.8 | 0.8 | 0.8 | 0,8 |
| Polybutadiengehalt | 13.8 | 12.5 | 11.2 | 10.0 | 8.7 | 7.5 | 0 |
| Eigenschaften | | | | | | | |
| Geruchsbewertung | -- | - | - | ○ | + | ++ | ++ |
| Nachbrennzeit t_{N} [s] | 2.3 | 3.2 | 4.8 | 7.3 | 5.7 | 2.4 | 3.0 |

**Tabelle 2: Zusammensetzung und Eigenschaften der Formmassen (vorangestelltes V: zum Vergleich)**

| Beispiel | V-1 | V-2 | 1 | 2 | 3 | 4 | 5 |
|---|---|---|---|---|---|---|---|
| Zusammensetzung [Gew.-teile (Gew.-%)] | | | | | | | |
| a-I | 55 | 45 | 35 | 25 | 15 | 10 | 0 |
| a-II | 0 | 10 | 20 | 30 | 40 | 45 | 55 |
| a-III | 37 | 37 | 37 | 37 | 37 | 37 | 37 |
| b1-I | 8 | 8 | 8 | 8 | 8 | 8 | 8 |
| Polybutadiengehalt | 13.9 | 11.3 | 8.8 | 6.3 | 3.8 | 2.5 | 0.0 |
| Eigenschaften | | | | | | | |
| Geruchsbewertung | - - | - | + | ++ | ++ | ++ | ++ |

Die Beispiele zeigen, dass die erfindungsgemäßen flammhemmend ausgerüsteten Formmassen basierend auf mit partikelförmigen Pfropfkautschuken schlagzäh modifizierten vinylaromatischen Copolymeren gegenüber bekannten Formmassen einen deutlich verringerten, d.h. akzeptablen Eigengeruch aufweisen.

## Patentansprüche

1. Thermoplastische Formmassen enthaltend:
A) 55 bis 98 Gew.-% mindestens eines mit einem partikelförmigen Pfropfkautschuk schlagzäh modifizierten vinylaromatischen Copolymers,
B) 1 bis 44 Gew.-% eines Flammschutzmittels enthaltend
B1) einen expandierbaren Graphit,
B2) eine Phosphor enthaltende Flammschutz-Verbindung und
B3) ein fluorhaltiges Polymer,
C) 1 bis 20 Gew.-% eines polare Gruppen enthaltenden, nicht-partikelförmigen Kautschuks, und
D) 0 bis 40 Gew.-% weiterer Zusatzstoffe,
wobei die Gewichtsprozente jeweils auf das Gesamtgewicht der Komponenten A) bis D) bezogen sind und zusammen 100 Gew.-% ergeben und der Polybutadiengehalt 0 bis 11 Gew.-% beträgt.

2. Thermoplastische Formmassen nach Anspruch 1, **dadurch gekennzeichnet, dass** der Polybutadiengehalt 3 bis 10,5 Gew.-% beträgt.

3. Thermoplastische Formmassen nach Anspruch 1 oder 2, **dadurch gekennzeichnet, dass** der Polybutadiengehalt 5 bis 10 Gew.-% beträgt.

4. Thermoplastische Formmassen nach Anspruch 1, **dadurch gekennzeichnet, dass** der Polybutadiengehalt 0 Gew.-% beträgt und der partikelförmige Pfropfkautschuk Poly-Meth(Acrylat) enthält.

5. Thermoplastische Formmassen nach Anspruch 1, **dadurch gekennzeichnet, dass** der Polybutadiengehalt 0 Gew.-% beträgt und der partikelförmige Pfropfkautschuk Poly- Acrylat enthält.

6. Thermoplastische Formmassen nach Anspruch 1, **dadurch gekennzeichnet, dass** der Polybutadiengehalt 0 Gew.-% beträgt und der partikelförmige Pfropfkautschuk Polybutylacrylat enthält.

7. Thermoplastische Formmassen nach einem der Ansprüche 1 bis 6, enthaltend als Komponente C) einen Ethylen-Acrylat-Kautschuk.

8. Thermoplastische Formmassen nach einem der Ansprüchen 1 bis 7, enthaltend als Komponente A) Acrylnitril-Styrol-Acrylat-Polymerisate ("ASA") und/oder Acrylnitril-Butadien-Styrol-Polymerisate ("ABS").

9. Thermoplastische Formmassen nach einem der Ansprüche 1 bis 8, enthaltend als Komponente B2) mindestens eine Verbindung ausgewählt aus anorganischen oder organischen Phosphaten, Phosphiten, Phosphonaten, Phosphatestern, rotem Phosphor und Triphenylphosphinoxid.

10. Thermoplastische Formmassen nach einem der Ansprüche 1 bis 9, enthaltend als Komponente B2) eine Mischung aus rotem Phosphor und aus mindestens einem anorganischen oder organischen Phosphat, Phosphit, Phosphonat, Phosphatester oder Triphenylphosphinoxid.

11. Thermoplastische Formmassen nach einem der Ansprüche 1 bis 10, enthaltend als Komponente B2) eine Mischung aus rotem Phosphor und Ammoniumpolyphosphat.

12. Thermoplastische Formmassen nach einem der Ansprüche 1 bis 11, enthaltend als Komponente B2) eine Mischung aus rotem Phosphor und Ammoniumpolyphosphat und Triphenylphosphat.

13. Verfahren zur Herstellung der thermoplastischen Formmassen gemäß einem der Ansprüche 1 bis 12, **dadurch gekennzeichnet, dass** die Komponenten A), B), C) und, falls vorhanden, D) schmelzevermischt werden.

14. Verwendung der thermoplastischen Formmassen gemäß einem der Ansprüche 1 bis 12 zur Herstellung von Fasern, Folien, Formkörpern und Schäumen.

15. Fasern, Folien, Formkörper und Schäume erhältlich aus den thermoplastischen Formmassen gemäß einem der Ansprüche 1 bis 12.

## Claims

1. A thermoplastic molding composition comprising:
A) from 55 to 98% by weight of at least one vinylaromatic copolymer impact-modified with a particulate graft rubber,
B) from 1 to 44% by weight of a flame retardant comprising
B1) an expandable graphite,
B2) a flame-retardant compound comprising phosphorus, and
B3) a fluorine-containing polymer,
C) from 1 to 20% by weight of a non-particulate rubber comprising polar groups, and
D) from 0 to 40% by weight of further additives,
where each of the percentages by weight is based on the total weight of components A) to D), and these percentages give a total of 100% by weight, and the polybutadiene content is from 0 to 11% by weight.

2. The thermoplastic molding composition according to claim 1, which has from 3 to 10.5% by weight polybutadiene content.

3. The thermoplastic molding composition according to claim 1 or 2, which has from 5 to 10% by weight polybutadiene content.

4. The thermoplastic molding composition according to claim 1, which has a 0% by weight polybutadiene content, and wherein the particulate graft rubber comprises polymeth(acrylate).

5. The thermoplastic molding composition according to claim 1, which has a 0% by weight polybutadiene content, and wherein the particulate graft rubber comprises polyacrylate.

6. The thermoplastic molding composition according to claim 1, which has a 0% by weight polybutadiene content, and wherein the particulate graft rubber comprises polybutyl acrylate.

7. The thermoplastic molding composition according to any of claims 1 to 6, comprising an ethyleneacrylate rubber as component C).

8. The thermoplastic molding composition according to any of claims 1 to 7, comprising, as component A), acrylonitrile-styrene-acrylate polymers ("ASA") and/or acrylonitrile-butadiene-styrene polymers ("ABS").

9. The thermoplastic molding composition according to any of claims 1 to 8, comprising, as component B2), at least one compound selected from inorganic or organic phosphates, phosphites, phosphonates, phosphate esters, red phosphorus, and triphenylphosphine oxide.

10. The thermoplastic molding composition according to any of claims 1 to 9, comprising, as component B2), a mixture made of red phosphorus and of at least one inorganic or organic phosphate, phosphite, phosphonate, phosphate ester, or triphenylphosphine oxide.

11. The thermoplastic molding composition according to any of claims 1 to 10, comprising, as component B2), a mixture made of red phosphorus and ammonium polyphosphate.

12. The thermoplastic molding composition according to any of claims 1 to 11, comprising, as component B2), a mixture made of red phosphorus and ammonium polyphosphate and triphenyl phosphate.

13. A process for producing the thermoplastic molding compositions according to any of claims 1 to 12, which comprises mixing, in the melt, components A), B), C), and, if present, D).

14. The use of the thermoplastic molding compositions according to any of claims 1 to 12 for producing fibers, foils, moldings, and foams.

15. A fiber, foil, molding, or foam obtainable from the thermoplastic molding compositions according to any of claims 1 to 12.

## Revendications

1. Masses de moulage thermoplastiques, contenant
A) 55 à 98% en poids d'au moins un copolymère aromatique de vinyle modifié en résilience par un caoutchouc greffé sous forme de particules,
B) 1 à 44% en poids d'agent ignifuge, contenant
B1) un graphite expansible,
B2) un composé ignifuge contenant du phosphore et
B3) un polymère fluoré,
C) 1 à 20% en poids d'un caoutchouc contenant des groupes polaires, non sous forme de particules
D) 0 à 40% en poids d'autres additifs,
les pourcentages en poids se rapportant à chaque fois au poids total des composants A) à D) et formant ensemble 100% en poids et la teneur en polybutadiène étant de 0 à 11% en poids.

2. Masses de moulage thermoplastiques selon la revendication 1, **caractérisées en ce que** la teneur en polybutadiène est de 3 à 10,5% en poids.

3. Masses de moulage thermoplastiques selon la revendication 1 ou 2, **caractérisées en ce que** la teneur en polybutadiène est de 5 à 10% en poids.

4. Masses de moulage thermoplastiques selon la revendication 1, **caractérisées en ce que** la teneur en polybutadiène est de 0% en poids et le caoutchouc greffé sous forme de particules contient du poly(méth)acrylate.

5. Masses de moulage thermoplastiques selon la revendication 1, **caractérisées en ce que** la teneur en polybutadiène est de 0% en poids et le caoutchouc greffé sous forme de particules contient du polyacrylate.

6. Masses de moulage thermoplastiques selon la revendication 1, **caractérisées en ce que** la teneur en polybutadiène est de 0% en poids et le caoutchouc greffé sous forme de particules contient du poly(acrylate de butyle).

7. Masses de moulage thermoplastiques selon l'une quelconque des revendications 1 à 6, contenant, comme composant C), un caoutchouc d'éthylène-acrylate.

8. Masses de moulage thermoplastiques selon l'une quelconque des revendications 1 à 7, contenant, comme composant A), des polymères d'acrylonitrile-styrène-acrylate ("ASA") et/ou des polymères d'acrylonitrilebutadiène-styrène ("ABS").

9. Masses de moulage thermoplastiques selon l'une quelconque des revendications 1 à 8, contenant, comme composant B2), au moins un composé choisi parmi les phosphates, les phosphites, les phosphonates, les esters de phosphate, organiques ou inorganiques, le phosphore rouge et le phosphinoxyde de triphényle.

10. Masses de moulage thermoplastiques selon l'une quelconque des revendications 1 à 9, contenant, comme composant B2), un mélange de phosphore rouge et d'au moins un phosphate, phosphite, phosphonate, ester de phosphate, organique ou inorganique, ou phosphinoxyde de triphényle.

11. Masses de moulage thermoplastiques selon l'une quelconque des revendications 1 à 10, contenant, comme composant B2), un mélange de phosphore rouge et de polyphosphate d'ammonium.

12. Masses de moulage thermoplastiques selon l'une quelconque des revendications 1 à 11, contenant, comme composant B2), un mélange de phosphore rouge et de polyphosphate d'ammonium et de phosphate de triphényle.

13. Procédé pour la préparation des masses de moulage thermoplastiques selon l'une quelconque des revendications 1 à 12, **caractérisé en ce que** les composants A), B), C) et le cas échéant D) sont mélangés en masse fondue.

14. Utilisation des masses de moulage thermoplastiques selon l'une quelconque des revendications 1 à 12 pour la fabrication de fibres, de feuilles, de corps façonnés et de mousses.

15. Fibres, feuilles, corps façonnés et mousses pouvant être obtenus à partir des masses de moulage thermoplastiques selon l'une quelconque des revendications 1 à 12.
